# EUROPEAN PATENT APPLICATION

(11) **EP 0 761 726 A2**
(43) Date of publication of application: **12.03.1997**
(21) Application number: 96114008.4
(22) Date of filing: 02.09.1996
(51) Int. Cl.: C08J 7/12

(54) **Process for corona discharge treatment of plastic surface**

(30) Priority: 01.09.1995 JP 224882/95; 20.06.1996 JP 159628/96
(71) Applicant: Nippon Paint Co., Ltd., Osaka-shi Osaka-fu (JP)
(72) Inventor: Miyazoe, Seigo, Ibaraki-shi, Osaka-fu (JP); Ueki, Koji, Osaka-fu (JP); Sugawara, Yasuhisa, Yokohama-shi, Kanagawa-ken (JP); Akutsu, Kensuke, Osaka-fu (JP); Tsuchiya, Yasuyuki, Osaka-fu (JP)
(74) Representative: Hansen, Bernd, Dr. Dipl.-Chem.

(57) **Abstract**

Present invention provides a process for corona discharge treatment, which improves more efficiently the plastic surface having poor wetting properties, particularly the surface of a molded material having various shapes. The plastic surface is treated with a corona discharge generated by a high-voltage pulse while blowing a gas.

## Description

### BACKGROUND OF THE INVENTION

### 1.Field of the invention

The present invention relates to a process for corona discharge treatment of the plastic surface.

### 2.Description of the prior art

A process of treating the plastic surface with a corona discharge to improve the surface characteristics has hitherto been known. Various processes are disclosed in Japanese Patent Kokai Nos. 119931/1982 and 57431/1987, in order to obtain an uniform treatment effect in a resin molded article having a solid unevenness, i.e. three-dimensional shape. However, these corona discharge treatment had a problem that a spark discharge is liable to arise and an edge part having an inner periphery of an outer peripheral opening part of the resin molded article is not sufficiently treated. In these prior arts, a corona discharge generated by an AC high-frequency voltage has generally been used.

Japanese Patent Kokai No. 225133/1983 discloses a process of conducting a corona discharge treatment while blowing a gas on the plastic surface. This process is characterized by forming an amino group or an imino group on the plastic surface using a gas other than atmosphere and oxygen as a blowing gas. However, this process does not include a thought of using a corona discharge due to a high-voltage pulse.

Japanese Patent Kokai No. 149731/1927 uses a corona discharge treatment, wherein a discharge electrode is in contact with the surface of a material to be treated, in combination with gas blowing, but an expansion of a treating range cannot be expected.

Japanese Patent Kokai No. 339397/1993 discloses a process of treating the plastic surface by generating a corona discharge due to a high-voltage pulse. This process is useful for industrially treating a molded article having a three-dimensional shape but an effect of the surface treatment, particularly effect of imparting a sufficient hydrophilic nature to the plastic surface is not sufficient. In case of the plastic molded material having a three-dimensional structure, when a peripheral part or inner peripheral part of an opening part of the molded article is treated with an AC high-frequency voltage, a distance between a discharge electrode and an counter electrode becomes small and, therefore, a spark discharge due to insulation breakdown of an air layer is liable to arise. On the other hand, when using a high-voltage pulse having a narrow pulse width, a spark discharge does not easily arise. However, in order to get increased treatment effect using the high-voltage pulse having a narrow pulse width, high applied voltage is required and an energy efficiency is drastically lowered. In this invention, the treatment effect is not sufficiently large because of the absence of gas blowing.

In the above conventional corona treatment, a long time and a large power source are required for modifying the plastic surface so as to impart sufficient adhesion properties to it and, therefore, the treatment is not industrially suitable. The treatment also had a problem that a part having a complex shape (e.g. slot, etc.) of a large molded article as the material to be treated can not be uniformly treated.

### SUMMARY OF THE INVENTION

The object of the present invention is to solve the above drawbacks, thereby providing a process for corona discharge treatment, capable of uniformly treating a large-sized molded article in a rationally short treating time using a small sized power source. The purpose of the present invention is to improve the surface of a plastic such as fluororesin having poor wetting properties, thereby improving application properties, printing characteristics, adhesion properties, etc.

The process according to present invention comprises corona-discharge treatment of the plastic surface while exposing it to a gas flow in the discharging regions. A corona discharge is generated by applying a high-voltage pulse having a pulse width of not less than 1 µsec, an average electric field strength represented by an applied voltage (wave crest value)/distance between electrodes of 4 to 200 kv/cm and a pulse frequency of not less than 20 pps.

The present invention is characterized in that the process can be also effectively applied to a three-dimensional molded article having an uneveness. The gas may include air, oxygen, nitrogen, a rare gas (e.g. helium, argon, etc.) and one or a mixed gas of at least two gases is selected according to the material to be treated. In case of a fluororesin whose surface is not easily modified, a mixture of helium and oxygen is used.

### BRIEF DESCRIPTION OF THE DRAWINGS

Fig. 1 is a schematic diagram illustrating the relation of the position between a discharge electrode, an counter electrode, a material to be treated and a gas blowing pipe.

Fig. 2 is a sectional view illustrating a gas blowing pipe.

Fig. 3 is an elevational view illustrating a gas blowing pipe.

Fig. 4 is a schematic diagram illustrating a construction of a discharge electrode and a gas blowing pipe in case of the unification of the electrode and gas blowing pipe.

Fig. 5 is a diagram illustrating the detail of a tip part of the discharge electrode of Fig. 4 including the X-X' section.

Fig. 6 is a schematic diagram illustrating the relation of the position between a discharge electrode, an counter electrode, a material to be treated and a gas blowing pipe in case of the unification of the electrode and gas blowing pipe.

Fig. 7 is a general view illustrating an U-shaped material used in Example 4.

### DATAILED DESCRIPTION OF THE INVENTION

The present invention provides a process for corona discharge treatment of the plastic surface, which comprises corona-discharge treating the plastic surface while exposing it to a gas flow in a discharge region where a corona discharge is generated by applying a high-voltage pulse having a pulse width of not less than 1 µsec, an average electric field strength represented by an applied voltage (wave crest value)/distance between electrode of 4 to 200 kv/cm and a pulse frequency of not less than 20 pps.

The present invention is characterized by conducting a corona discharge at a high-voltage pulse while exposing the plastic surface to a gas flow when the corona discharge of the plastic surface is conducted.

It is a known technique to send a gas flow so as to make the plasma state stable, but the effective plasma region could not be widen by the corona discharge due to high frequency even if air blowing is used in combination. In the present invention, however, the corona discharge due to a pulse voltage is used and, therefore, it is possible to widen the plasma region where the corona discharge treatment can be conducted in combination with air blowing. Thus, it is possible to treat the material to be treated, more uniformly and more effectively.

Examples of the plastic improved in the present invention include plastics which have a strong hydrophobic nature and can not get wet easily, for example, polyolefin such as polyethylene (e.g. high density polyethylene, medium-density polyethylene, low-density polyethylene, high-pressure-processed polyethylene, medium-pressure-processed polyethylene, low-pressure-processed polyethylene, linear low-density polyethylene, branched low-density polyethylene, high-pressure-processed linear low-density polyethylene, ultra-high-molecular-weight polyethylene, crosslinked polyethylene, polyethylene modified with small amount of monomer for modification, etc), polypropylene, modified polypropylene, polyisobutyrene, polyisoprene, polybutadiene, copolymer thereof, polyolefin mixture, mixture of polyolefin and polyvinyl chloride, polystyrene or polycarbonate, etc.; and fluororesin such as ethylene-tetrafluoroethylene copolymer (ETFE), polyvinylfluoride resin (PVF), tetrafluoroethylene-perfluoroether copolymer (PFA), tetrafluoroethylene-hexafluoropropylene copolymer (FEP), polytetrafluoroethylene (PTFE), polyvinylidene fluoride resin (PVdF), trifluorochloroethylene resin (PCTFE), ethylene-trifluorochloroethylene copolymer resin (ECTFE), etc. These plastics may contain additives such as pigments, fillers, lubricants, etc.

These plastics may be those having a planar structure such as film, sheet, panel, etc., and may also be a three-dimensional structure molded material having an unevenness, such as tube, pipe, etc. Particularly, the present invention is characterized in that the process can also be effectively applied to a three-dimensional molded material having an unevenness.

The plastic to be treated with the process of the present invention is interposed between a discharge electrode for corona discharge and an counter electrode, and then corona-discharged while flowing a gas or gases to the plastic surface.

In the present invention, the gas may include air, oxygen, nitrogen, a rare gas (e.g. helium, argon, etc.) and one or a mixed gas of at least two gases is selected according to the material to be treated. In case of a fluororesin whose surface is not easily modified, a mixture of helium and oxygen is used.

The gas is allowed to flow on the plastic surface. Particularly, the plastic surface is corona-discharged while blowing the gas to it. The gas blowing condition is as follows.

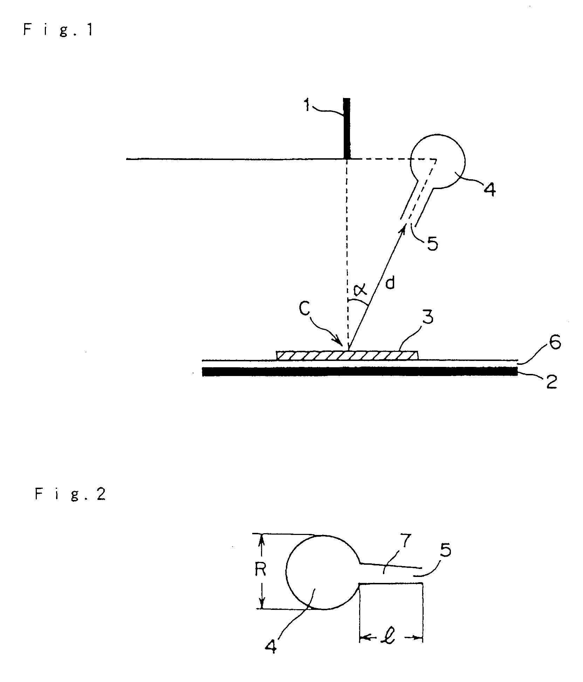

As shown in Fig. 1, when a plastic to be treated (3) is arranged between a discharge electrode for corona discharge (1) and an counter electrode (2), a gas is preferably blown to a position (c) of intersection of a perpendicular from the discharge electrode to the counter electrode and the surface of material to be treated. In that case, an angle of air blowing (α) [angle between the perpendicular from the discharge electrode to the counter electrode and a straight line connecting an gas blowing port (5) with the point of intersection (c)] is from 0 to 90°, preferably from 0 to 45°, more preferably from 0 to 30°. A distance of gas blowing (d) (distance between the gas blowing port and point of intersection (c)) is from 1 to 40 cm and is set according to the distance between a discharge electrode tip and the surface of a material to be treated and a shape of the material to be treated.

Under these conditions, an amount of the gas blown varies depending on the angle of gas blowing (α) and distance of gas blowing (d), but is 0.05 to 40 L/min·cm², preferably from 0.2 to 30 L/min·cm², more preferably from 0.4 to 8 L/min·cm². When the angle of gas blowing (α) is not less than 90°, it becomes difficult to blow into the discharge region and the effect of surface modification is not sufficient. When the distance of gas blowing (d) is not less than 15 cm, a wind pressure of the gas blown to the surface of the plastic to be treated becomes low. Therefore, a contact efficiency or permeability between the plastic surface and active gas on corona discharge becomes low and the effect of surface modification becomes insufficient.

When the amount of the gas blown is smaller than 0.05 L/min·cm², the blowing effect becomes insufficient. On the other hand, when the amount is larger than 40 L/min·cm², the corona discharge itself diffuse and the effect of surface modification is deteriorated.

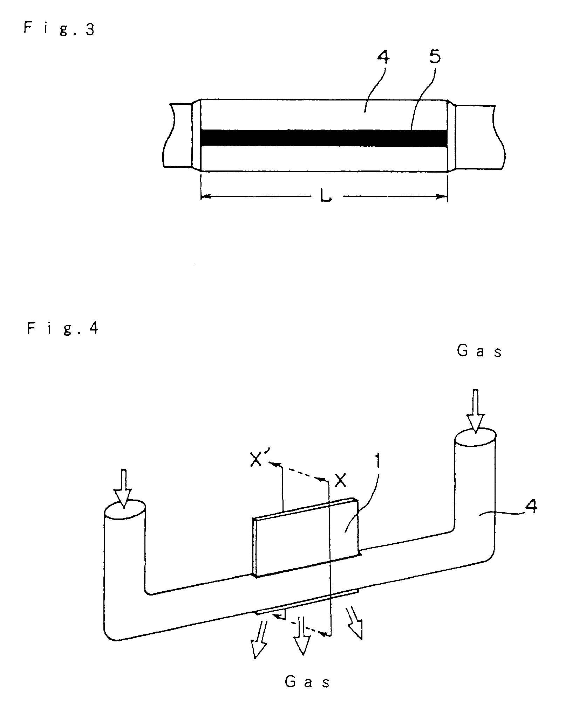

Typical examples of a device (gas blowing pipe) used for blowing a gas which can be used in the present invention are shown in Fig. 2 and Fig. 3. Fig. 2 is a sectional view illustrating a gas blowing pipe and Fig. 3 is an elevational view illustrating a gas blowing pipe. (4) is a gas blowing pipe, (5) is a gas blowing port and (7) is an gas blowing nozzle. A diameter of the gas blowing pipe (4) is preferably from 20 to 40 mm. When the diameter exceeds the above range, the pipe comes into contact with a discharge electrode. A length of the gas blowing nozzle is from 0 to 40 mm and that of the gas blowing port is preferably from 200 to 1000 mm, particularly 300 to 800 mm. This length may be decided according to the size of the discharge electrode. A width of the gas blowing port is preferably from 0.5 to 10 mm, particularly from 0.5 to 5 mm. When a plurality of discharge electrodes are present, gas blowing ports may by provided corresponding to the respective discharge electrodes. Fig. 4 is a schematic diagram illustrating one embodiment capable of efficiently blowing gas to the surface of a material to be treated, wherein a discharge electrode and a gas blowing pipe are integrally molded.

A selection of a relation between the discharge electrode and air blowing pipe can be conducted according to the shape of the material to be treated. For example, when the material to be treated is a film or a block-shaped material having a simple surface shape, an integrally molded type is preferred. On the other hand, when the material to be treated has a complicated shape, those wherein the gas blowing pipe and discharged electrode are separated are preferred.

The above embodiment is merely one example of a gas blowing device of the present invention and is not limited thereto.

The corona discharge used in the present invention is conducted by a high-voltage pulse. A pulse width is not less than 1 µsec. It has hitherto been considered that the pulse width must be not more than 1 µsec so as to conduct the corona discharge without causing a spark. A spark having a deleterious influence on the treatment of the plastic surface does not arise easily under the discharge conditions (e.g. average electric field strength, pulse frequency, etc.) of the present invention, and the blowing effect of the gas remarkably appeared. When the pulse width is less than 1 µsec, the effect of surface treatment of the plastic is not sufficient. In order to conduct this surface treatment sufficiently, the energy efficiency is lowered.

On the other hand, an effective discharge energy increases as the pulse width becomes wide and, therefore, the action of the surface treatment to the plastic molded article becomes strong. Alternatively, the corona discharge extends over the plastic molded article. That is, the treatment efficiency is improved and the intended effect of the surface treatment can be accomplished in a short time. When the pulse width is large, the corona discharge having a sufficient intensity can also be generated between electrodes and a good effect of the surface treatment can be accomplished even in case of increased distance. Therefore, it becomes unnecessary that the respective electrodes are arranged close to the surface of the plastic molded article. Accordingly, it is possible to use the counter electrode and discharge electrode having more simple shape and to arrange the discharge electrode at the position apart from the plastic molded article. As a result, even in case of the plastic molded article having a complicated shape, an electrode having a comparatively simple shape can be used. Therefore, it becomes unnecessary to change the shape of the respective electrodes for each molded article.

However, when the pulse width becomes too long, a deleterious spark is liable to arise and a capacity of a power source is increased. Therefore, it is preferred to set the pulse at not more than 50 µsec.

The pulse width is preferably from 1 to 50 µsec, more preferably from 1 to 30 µsec.

The discharge phenomenon is also influenced by the distance between electrodes and applied voltage.

The distance between electrodes refers to a distance between the discharge electrode and counter electrode. Specifically, the electrode distance is preferably from 5 to 400 mm. When a particularly large molded article is treated, the treating region must be increased and, therefore, the electrode distance is preferably from 50 to 400 mm.

The applied voltage for corona discharge is represented by an average electric field strength [applied voltage (wave crest value)/distance between electrodes] and is within the range from 4 to 200 kv/cm, preferably from 6 to 150 kv/cm, more preferably from 8 to 120 kv/cm. When the electric filed strength is less than 4 kv/cm, the effective corona discharge does not easily arise and effect of surface treatment becomes inferior. On the other hand, when the average electric field strength exceeds 200 kv/cm, a spark is liable to arise, and either case is not preferred.

When the applied voltage is comparatively high and the average electric filed strength becomes not less than 6 kv/cm, a dielectric (6) described hereinafter is preferably interposed between the counter electrode and plastic.

The pulse frequency is not less than 20 pps, preferably from 20 to 1000 pps, more preferably from 40 to 700 pps. When the pulse frequency is less than 20 pps, an effective treating energy per unit time is insufficient and a time required for the surface treatment becomes long, and it is not preferred. It is technically difficult to generate a high-voltage pulse having the pulse frequency of not less than 1000 pps using the pulse width and average electric field strength as described above. When a trial of obtaining the pulse frequency of not less than 1000 pps is made, a high-voltage generating device becomes large-scale and a plant cost becomes too high. Therefore, it becomes impossible to make a profit, industrially, and it is not preferred.

As the high-voltage pulse generating device, a high-voltage pulse generating device used in a conventional process for corona discharge treatment can be basically used.

It is preferred to interpose a dielectric (6) between the counter electrode and plastic to be treated. This makes it possible to prevent a deleterious spark from generating even if the applied voltage (wave crest value) is high and average electric field strength is also high. As the dielectric, there can be optionally used a vinyl chloride resin, a Teflon resin and other general dielectric materials. A thickness of the dielectric is not less than 1 mm, preferably from 5 to 20 mm. When a thickness of the dielectric is less than 1 mm, the effect of preventing the spark is insufficient. On the other hand, when the thickness is larger than 20 mm, a difference in effect of the treatment is not recognized. A position of the dielectric is not specifically limited and the dielectric can be arranged at any position. When a comparatively thin dielectric layer is formed on the surface of the counter electrode, it is preferred to use a plate material having a thickness of not less than 0.1 mm, preferably not less than 1.6 mm, as the counter electrode in order to obtain sufficient mechanical strength and durability. It is also possible to use one produced by forming a thin film or foil of a conductive material (e.g. copper, aluminum, etc.) on the back surface of the dielectric as the counter electrode. In this case, it is preferred to increase the thickness of the dielectric, to e.g. not less than about 5 mm, so as to impart a sufficient mechanical strength. It is preferred to convey the plastic to be treated at a constant speed so as to conduct the corona discharge treatment, continuously and uniformly.

According to the above treatment, hydrophilization of the plastic surface is widely and uniformly conducted in a shorter time in comparison with a conventional corona discharge treatment.

The process of the present invention may be applied to the flat surface such as plastic film, plastic sheet, plastic panel, etc., and is particularly useful for a plastic molded material having a three-dimensional structure.

The following Examples further illustrate the present invention in detail.

### Example 1

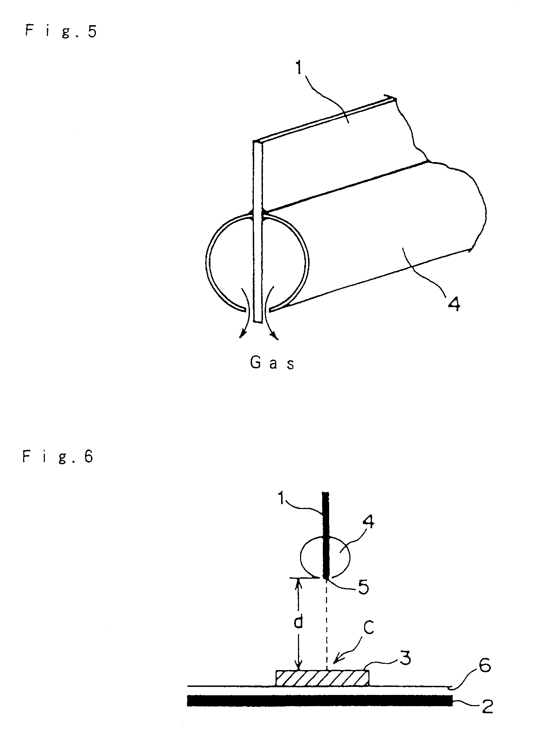

A polypropylene panel (10 cm in length x 5 cm in width x 0.3 cm in thickness) was arranged at the position, where a distance of gas blowing to the center part of the panel and a distance between electrodes become 50 mm, in a corona discharge device (shown in Fig. 6) equipped with a vinyl chloride sheet having a thickness of 5 mm as a dielectric, and then subjected to a corona discharge treatment under the following conditions.

### Condition of gas blowing

A gas shown in Table 1 was continuously blown on a panel at an amount of gas blowing of 2.5 L/min·cm² from a gas blowing pipe for gas blowing.

### Condition of corona discharge

A panel was subjected to a corona discharge treatment at an applied voltage of 150 KV, a pulse frequency of 100 pps and a distance between electrodes of 50 mm under the above condition of gas blowing for 60 seconds. A discharge electrode has a length of 300 mm and was arranged parallel to a longitudinal direction of a gas blowing port.

### Evaluation of wetting properties

Wetting properties of the corona-discharge treated panel to water were measured by using a CA-D contact angle measuring device (manufactured by Kyowa Kaimen Kagaku Co., Ltd.). As a measuring point, a point just under the discharge electrode and a point which is D (distance) away from the point (perpendicular to a center line of the panel) were selected. The measured results are shown in Table 1. A sample obtained by subjecting to a corona discharge treatment according to the same manner as that described above except for blowing no gas is shown as Comparative Example in Table 1.

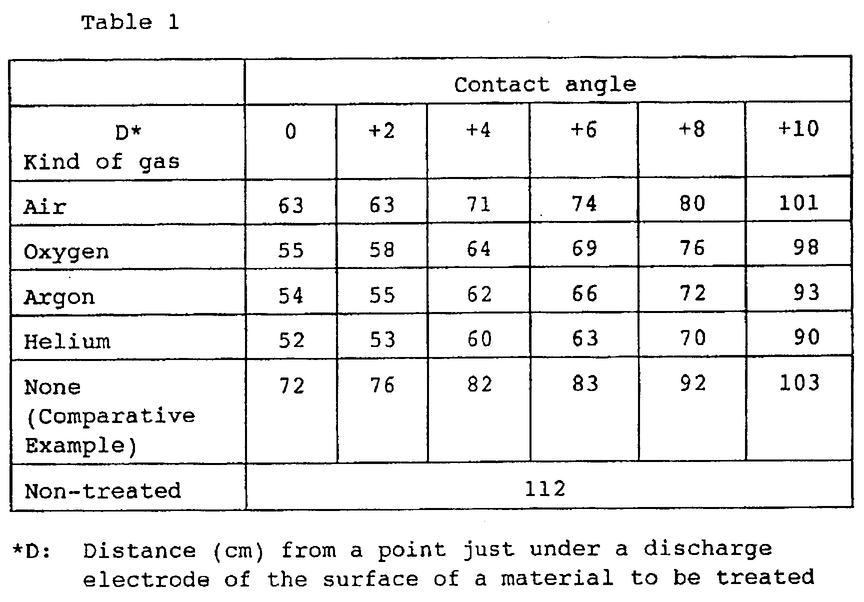

### Example 2

A tetrafluoroethylene-perfluoroether copolymer (PFA) film (10 cm in length x 5 cm in width x 40 µ in thickness) was arranged at the position where a distance of gas blowing to the center part of the panel and a distance between electrodes become 20 mm in the same corona discharge device as Example 1, and then subjected to a corona discharge treatment under the following conditions.

### Condition of gas blowing

A gas shown in Table 2 was continuously blown on a panel at an amount of gas blowing of 2.5 L/min·cm² from a gas blowing pipe for gas blowing.

### Condition of corona discharge

A panel was subjected to a corona discharge treatment at an applied voltage of 100 KV, two levels of a pulse frequency of 100 pps and 500pps and an distance between electrodes of 20 mm under the above condition of gas blowing for 60 seconds. A discharge electrode has a length of 300 mm and was arranged parallel to a longitudinal direction of a gas blowing port.

According to the same manner as that described in Example 1, a film which was corona-discharge treated under the above condition and a film which was corona-discharge treated without blowing a gas were measured and the measured values are shown in Table 2.

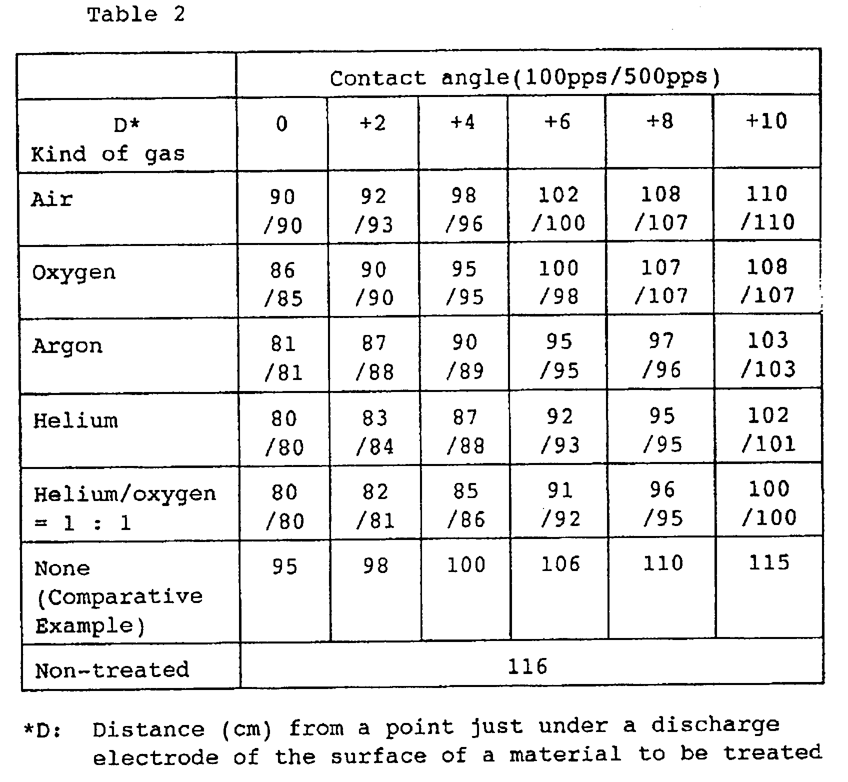

### Example 3

According to the same manner as that described in Example 2 except for using the gases and amount of gas blowing shown in Table 3, the corona discharge treatment was conducted. A point for measuring a contact angle was only a point just under the discharge electrode.

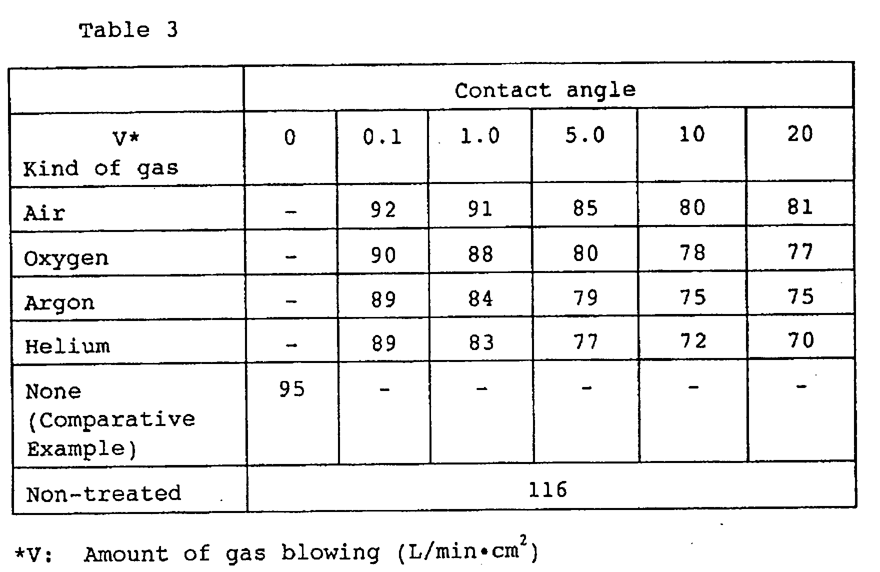

### Example 4

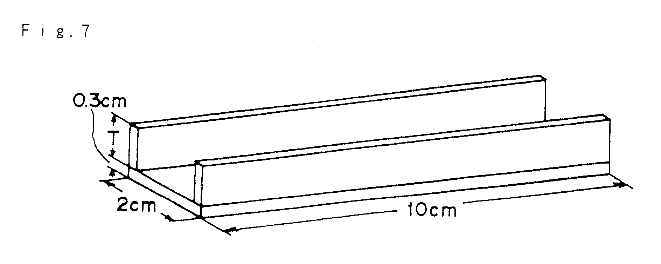

A polypropylene U-shaped material (10 cm in length x 2 cm in width x 0.3 cm in thickness x T cm in height) shown in Fig. 7 was arranged in a corona discharge device (shown in Fig. 1) equipped with a vinyl chloride sheet having a thickness of 5 mm as a dielectric.

### Condition of gas blowing

A gas blowing pipe for gas blowing (gas blowing port: 5 mm in width x 800 mm in length, length of gas blowing nozzle: 40 mm) was arranged at the position where the angle of air blowing becomes 20° and a distance of gas blowing becomes 100 mm when a center line in a longitudinal direction of the bottom of a material to be treated passes just under the discharge electrode, and then a gas shown in Table 4 was continuously blown on the U-shaped material at an amount of air blowing of 5 L/min·cm².

### Condition of corona discharge

An applied voltage, a pulse frequency and a distance between electrodes were set at 230 KV, 85 pps and 350 mm, respectively. The five discharge electrodes were arranged with the interval of 350mm in the direction perpendicular to the direction where the materials to be treated are conveyed so that a discharge length becomes 800 mm, and then the materials to be treated were transferred at a conveying speed of 0.8 m/minute under this discharge electrode.

Various U-shaped materials having a height T shown in Table 4 were subjected to a corona discharge treatment under the above conditions, and then a contact angle at the center of the bottom surface was measured. The results are shown in Table 4.

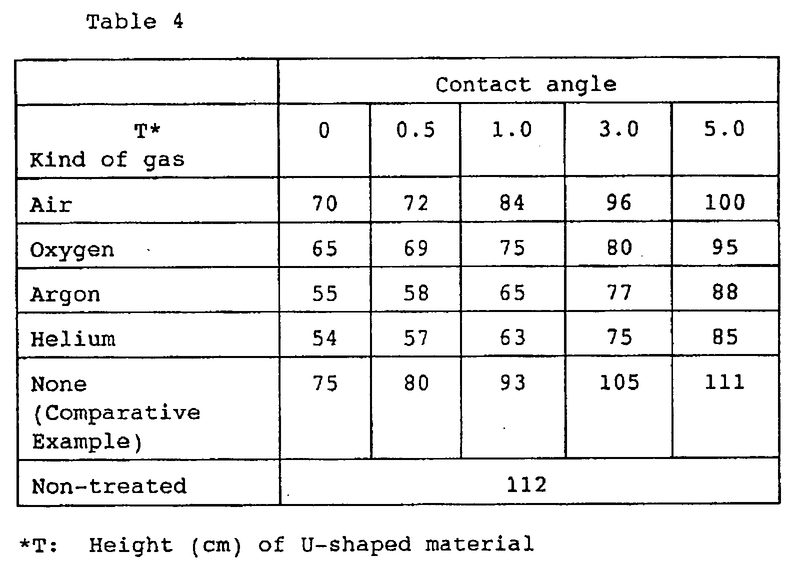

## Claims

1. A process for corona discharge treatment of the plastic surface, which comprises corona-discharge treating the plastic surface while exposing it to a gas flow in a discharge region where a corona discharge is generated by applying a high-voltage pulse having a pulse width of not less than 1 µsec, an average electric field strength represented by an applied voltage (wave crest value)/distance between electrodes of 4 to 200 kv/cm and a pulse frequency of not less than 20 pps.

2. The process according to claim 1, wherein the plastic is selected from the group consisting of polypropylene resin, polyethylene resin and fluororesin.

3. The process according to claim 1, wherein the gas is one or a mixture of at least two gases selected from the group consisting of oxygen, nitrogen, helium, argon and other rare gases.

4. The process according to claim 1 or 3, which is conducted while blowing a gas to the plastic surface.

5. The process according to claim 4, wherein the gas is blown at an amount of gas blowing of 0.05 to 40 L/min·cm² from a gas blowing port provided to the plastic surface at an angle of gas blowing (α) of 0 to 90° and a distance of gas blowing (d) of 1 to 40 cm.

6. The process according to claim 1, 2 or 5, wherein the plastic has a three-dimensional shape.
